(19) Europäisches Patentamt European Patent Office Office européen des brevets

(11) **EP 3 728 671 B1**

(12) **EUROPEAN PATENT SPECIFICATION**

(45) Date of publication and mention
of the grant of the patent:
**18.01.2023  Bulletin 2023/03**

(21) Application number: **18833711.7**

(22) Date of filing: **11.12.2018**

(51) International Patent Classification (IPC):
$C22C\ 38/00$ (2006.01)   $C09D\ 7/40$ (2018.01)
$C08K\ 3/04$ (2006.01)   $C09D\ 5/00$ (2006.01)
$C09D\ 1/00$ (2006.01)   $C21D\ 1/70$ (2006.01)
$C22C\ 38/50$ (2006.01)   $C22C\ 38/48$ (2006.01)
$C22C\ 38/46$ (2006.01)   $C22C\ 38/44$ (2006.01)
$C22C\ 38/42$ (2006.01)   $C22C\ 38/40$ (2006.01)
$C22C\ 38/04$ (2006.01)   $C22C\ 38/02$ (2006.01)
$C21D\ 8/02$ (2006.01)   $C21D\ 8/04$ (2006.01)
$C23C\ 24/08$ (2006.01)

(52) Cooperative Patent Classification (CPC):
C22C 38/004; C09D 1/00; C09D 5/002; C09D 7/70;
C21D 1/70; C21D 8/0215; C21D 8/0226;
C21D 8/0284; C21D 8/0484; C22C 38/02;
C22C 38/04; C22C 38/40; C22C 38/42;
C22C 38/44; C22C 38/46;           (Cont.)

(86) International application number:
**PCT/IB2018/059868**

(87) International publication number:
**WO 2019/123103 (27.06.2019 Gazette 2019/26)**

(54) **METHOD FOR THE MANUFACTURE OF A COATED STEEL SUBSTRATE**

METHODE ZUM HERSTELLEN EINES BESCHICHTETEN STAHLSUBSTRATS

MÉTHODE POUR LA FABRICATION D'UN SUBSTRAT EN ACIER REVÊTU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Validation States:
**MA**

(30) Priority:  **19.12.2017  PCT/IB2017/058103**

(43) Date of publication of application:
**28.10.2020  Bulletin 2020/44**

(73) Proprietor: **ArcelorMittal**
**1160 Luxembourg (LU)**

(72) Inventors:
• **VU, Thi Tan**
  **33011 Oviedo (ES)**
• **LALIENA IRANZO, Carlos**
  **33011 Oviedo Asturias (ES)**
• **PÉREZ RODRÍGUEZ, Marcos**
  **33800 Cangas Del Narcea, Asturias (ES)**
• **NORIEGA PEREZ, David**
  **33011 Oviedo, Asturias (ES)**

(74) Representative: **Lavoix**
**2, place d'Estienne d'Orves**
**75441 Paris Cedex 09 (FR)**

(56) References cited:
CN-A- 1 510 089      CN-A- 101 696 328
JP-A- 2000 319 758      JP-A- 2001 073 033
KR-A- 20170 071 678      US-A- 3 957 673
US-A1- 2008 233 295      US-B1- 6 576 336

(52) Cooperative Patent Classification (CPC): (Cont.)
**C22C 38/48; C22C 38/50; C23C 24/08;** C08K 3/04

**Description**

The present invention relates to a method for the manufacture of steel substrate with a coating including nanographite having a specific lateral size, and a binder, and further to a method for the manufacture of a hot-rolled steel product from the coated steel substrate. It is particularly well suited for steel industry.

In the steel route production, after the steel making step, the steel is casted in the continuous casting. Semi-products, such as slabs, billets or blooms, are thus obtained. Usually, the semi-products are reheated at high temperature in a reheating furnace to dissolve the precipitates formed during the continuous casting and to obtain a hot workability. They are then descaled and hot-rolled. However, during the reheating step, semi-products oxidized in a form of scale. A high proportion of scale is usually formed. Thus, a large amount of scale is removed during the descaling step resulting in an important weight loss of the steel product.

The patent application CN101696328 discloses a protective coating for a surface of a steel piece in order to prevent the surface from oxidation and decarburization at high temperature and, improve hardness and abrasion resistance and ultimately increase the overall service life of the steel workpiece, for the case of oxidation and decarburization of a surface (substrate) of a steel workpiece at high temperature, and the surface oxidation decarburization under the oxidizing atmosphere during heat treatment, forging, hot rolling, roll forming heating, particularly for the case that the steel workpiece is easy to be oxidized and decarbonized at high temperature in a heat treatment, leading to reduction in carbon atoms and carbon content, and the change in the surface (substrate) microstructure results in a reduced hardness, a reduced abrasion resistance and a short overall service life.

In this patent, the coating has a composition of: graphite, water glass and surface penetrant, in which a volume ratio of the graphite to sodium silicate is 1: 3 to 1: 7, and the surface penetrant constitutes 0.05% to 0.15% by volume of the coating. Nevertheless, the tests were performed with low carbon steels including 25 (carbon steel) and HT300 (cast iron) and with very high alloy steels including 32CrMo and Mn13.

Steel compositions are also known from JP2001073033 and JP2000319758.

Thus, the purpose of the invention is to provide a method for the manufacture of a coated steel substrate and a method for the manufacture of a hot-rolled steel product with a specific steel composition wherein the weight loss due to the oxidation of semi-products during the reheating step is significantly reduced.

This is achieved by the methods according to claims 1 and 16.

To illustrate the invention, various embodiments and trials of non-limiting examples will be described, particularly with reference to the following Figure:

Figure 1 illustrates an example of coated steel substrate according to the present invention.
Figure 2 illustrates an example of one nanographite according to the present invention.

Other characteristics and advantages of the invention will become apparent from the following detailed description of the invention.

The invention relates to a method for the manufacture of a coated steel substrate comprising a coating comprising nanographite having a lateral size between 1 and 60$\mu$m and a binder wherein the steel substrate has the following compositions in weight percent:

$0.31 \leq C \leq 1.2\%$,
$0.1 \leq Si \leq 1.7\%$,
$0.15 \leq Mn \leq 1.1\%$,
$P \leq 0.01\%$,
$S \leq 0.1\%$,
$Cr \leq 0.5\%$,
$Ni \leq 0.5\%$,
$Mo \leq 0.1\%$,
and on a purely optional basis, one or more elements such as
$Nb \leq 0.05\%$,
$B \leq 0.003\%$,
$Ti \leq 0.06\%$,
$Cu \leq 0.1\%$,
$Co \leq 0.1\%$,
$N \leq 0.01\%$,
$V \leq 0.05\%$,
the remainder of the composition being made of iron and inevitable impurities resulting from the elaboration.

Without willing to be bound by any theory, it seems that a coating comprising nanographite having a lateral size between 1 and 60$\mu$m and a binder on a steel substrate having the above specific steel composition acts like a barrier to the oxidation and therefore to the scale formation during the reheating of the coated steel substrate. The inventors have found that not only the steel composition but also the nature of coating plays an important role on the reduction of steel oxidation during a heating treatment.

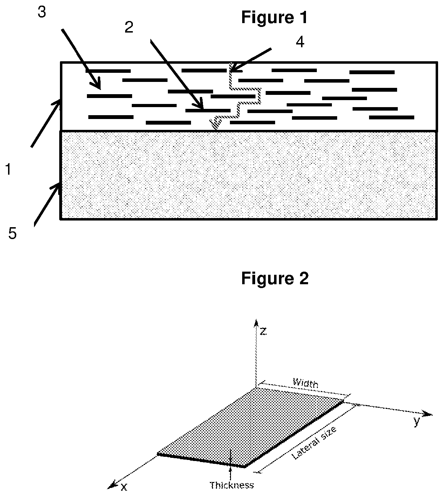

Additionally, as illustrated in Figure 1, it is believed that in the coating (1) nanographite flakes (2) having this specific lateral size are well dispersed into the binder (3) in a form of tortuous path (4). Thus, it seems that the oxygen diffusion through the coating is very restricted allowing an important reduction of the scale formation and a significant weight gain of the steel substrate. Finally, it is believed that the use of nanographites having the lateral size between 1 and 60$\mu$m allows for a cluster including a large amount of nanographite flake resulting in a narrower space between each nanographite particle. Thus, the tortuous path is more difficult to cross reducing significantly the oxygen diffusion toward the steel substrate (5).

Regarding the chemical composition of the steel, preferably, the C amount is between 0.31 and 1.0% by weight.

Preferably, the Mn amount is between 0.15 and 0.7% by weight.

Advantageously, the amount of Cr is below or equal to 0.3% by weight.

Preferably, the amount of Ni is below or equal to 0.1% by weight.

Advantageously, the amount of Mo is below or equal to 0.1%.

Figure 2 illustrates an example of nanographite flake according to the present invention. In this example, the lateral size means the highest length of the nanoplatelet through the X axis and the thickness means the height of the nanoplatelet through the Z axis. The width of the nanoplatelet is illustrated through the Y axis.

Preferably, the lateral size of the platelet is between 20 and 55$\mu$m and more preferably between 30 and 55$\mu$m.

The thickness of the coating is between 10 and 250$\mu$m. For example, the thickness of the coating is between 10 and 100$\mu$m or between 100 and 250$\mu$m.

Advantageously, the steel substrate is a, a slab, a billet or a bloom.

The binder is sodium silicate or the binder includes aluminum sulfate and an additive being alumina. In this case, without willing to be bound by any theory, it seems that the coating according to the present invention better adheres on the steel substrate so that the steel substrate is even more protected. Thus, the risk of coating cracks and coating detachment, exposing the steel substrate to oxidation, is more prevented.

Preferably, the coating further comprises an organometallic compound. For example, the organometallic compound includes Dipropylene glycol monomethyl ether ($CH_3OC_3H_6OC_3H_6OH$), 1,2-Ethanediol ($HOCH_2CH_2OH$) and 2-ethylhexanoic acid, manganese salt ($C_8H_{16}MnO_2$). Indeed, without willing to be bound by any theory, it is believed that the organometallic compound allows for a fast curing of the coating avoiding a drying step at high temperature.

The invention relates to a method for the manufacture of the coated steel substrate according to the present invention, comprising the successive following steps:

    A. The provision of a steel substrate having the above steel composition,
    B. The coating deposition using an aqueous mixture to form the coating,
    C. Optionally, the drying of the coated steel substrate obtained in step B).

Preferably, in step B), the deposition of the coating is performed by spin coating, spray coating, dip coating or brush coating.

In step B), the aqueous mixture comprises from 1 to 60g/L of nanographite and from 150 to 250g/L of binder. Preferably, the aqueous mixture comprises from 1 to 35g/L of nanographite.

Preferably, in step B), wherein the aqueous mixture comprises nanographite comprising above 95% and advantageously 99% by weight of C.

Advantageously, in step B), the ratio in weight of nanographite with respect to binder is below or equal to 0.3.

Preferably, in step B), the aqueous mixture comprises an organometallic compound. More preferably, the concentration of the organometallic compound is equal or below to 0.12wt.%. Indeed, without willing to be bound by any theory, it is believed that this concentration allows for an optimized coating without any curing or with a curing at room temperature.

In a preferred embodiment, the coating is dried in a step C). Without willing to be bound by any theory, it is believed that the drying step allows for an improvement of the coating adhesion. Indeed, since water evaporates, the binder becomes tackier and more viscous leading to a hardened condition. In a preferred embodiment, in step C), the drying is performed at room temperature or a temperature between 50 and 150°C and preferably between 80 and 120°C.

In another preferred embodiment, no drying step is performed.

Preferably, in step C), when a drying is applied, the drying step is performed with hot air.

Advantageously, in step C), when a drying is applied, the drying is performed during 5 to 60minutes and for example, between 15 and 45minutes.

The invention also relates to a method for manufacture of a hot-rolled steel product comprising the following successive steps:

I. The provision of the coated steel substrate according to the present invention,
II. The reheating of the coated steel substrate in a reheating furnace at a temperature between 750 and 1200°C,
III. The descaling of the reheated coated steel sheet obtained in step II) and
IV. The hot-rolling of the descaled steel product.

The reheating is performed at a temperature between 750 and 1200°C. Without willing to be bound by any theory, it is believed that above 1200°C, fayalite can be formed at the interface between the steel substrate and the coating. Preferably, in step II), the reheating is performed at a temperature between 750 and 900°C or between 900 and 1200°C.

Preferably, in step III), the descaling is performed using water under pressure. For example, the water pressure is between 100 and 150 bars. In another embodiment, the descaling is performed mechanically, for example, by scratching or brushing the scale layer.

With the method according to the present invention, a hot rolled steel product having a high weight mass is obtained compared to the prior art.

For example, after the hot-rolling, the hot product can be coiled, cold-rolled, annealed in an annealing furnace and also coated with a metallic coating.

Finally, the obtained hot-rolled steel product can be used for the manufacture of a part of an automotive vehicle, a rail, a wire or a spring.

The invention will now be explained in trials carried out for information only. They are not limiting.

Examples:

In Examples, steels substrates having the following steel composition in weight percent were used:

| Steel | C | Mn | Si | Cu | Cr | Ti | V | Mo | Ni |
|---|---|---|---|---|---|---|---|---|---|
| 1 | 0.0011 | 0.098 | 0.007 | 0.011 | 0.016 | 0.05 | 0.002 | 0.001 | 0.019 |
| 2 | 0.39 | 0.673 | 1.593 | 0.011 | 0.036 | 0.003 | 0.002 | 0.001 | 0.014 |
| 3 | 0.901 | 0.309 | 0.244 | 0.017 | 0.215 | 0.002 | 0.002 | 0.001 | 0.019 |
| 4 | 0.798 | 1.310 | 0.446 | 0.014 | 0.097 | 0.0014 | 0.0026 | 0.0018 | 0.016 |

Trial 1 was casted in the form of slab and Trials 2 to 4 were casted in the form of Steels 1 and 4 are reference steels.

Example 1: Oxidation test

For Trials 1, 3, 5, 7, 9, 11, 13, 15 and 17, steels 1 to 4 were coated by spraying an aqueous mixture comprising 30g/L of nanographite having a lateral size between 35-50$\mu$m and a binder onto the steel. Then, the coating was dried during 30 minutes at 100°C.

Then, uncoated steels (Trials 2, 4, 6, 8, 10, 12, 14, 16 and 18) and coated steels (Trials 1, 3, 5, 7, 9, 11, 13, 15 and 17) were reheated at 800°C, 1000°C and 1250°C. After the reheating, all the trials were weighted. For each Trial, $\Delta$weight was determined by subtracting the weight after reheating from the weight before the reheating. The percentage of weight gain of the coated Trial was then calculated with the following formula:

$$\text{weight gain } (\%) = 100 - \left( \frac{\Delta\text{weight of coated trial} \times 100}{\Delta\text{weight of uncoated trial}} \right).$$

The results are in the following Table 1:

| Trials | Steels | Coating | Reheating step | | Δ Weight (g) | Weight gain (%) |
| --- | --- | --- | --- | --- | --- | --- |
| | | | temperature (°C) | time | | |
| 1 | 1 | nanographite and binder: $Na_2SiO_3$ (sodium silicate) | 1000 | 3h20min | 9.8 | 7 |
| 2 | 1 | - | 1000 | 3h20min | 10.5 | |
| 3 | 1 | nanographite and binder: $Na_2SiO_3$ | 1250 | 15min | 12.19 | 5 |
| 4 | 1 | - | 1250 | 15min | 12.78 | |
| 5 | 1 | nanographite and $Al_2(SO_4)_3$ (aluminum sulfate) | 1250 | 15min | 32 | -7 |
| 6 | 1 | - | 1250 | 15min | 30 | |
| 7* | 2 | nanographite and binder: $Na_2SiO_3$ | 800 | 3h20min | 0.72 | 25 |
| 8 | 2 | - | 800 | 3h20min | 0.96 | |
| 9* | 2 | nanographite and binder: $Na_2SiO_3$ | 1000 | 3h20min | 6.3 | 23 |
| 10 | 2 | - | 1000 | 3h20min | 8.2 | |
| 11* | 3 | nanographite and binder: $Na_2SiO_3$ | 800 | 1h15min | 0.17 | 43 |
| 12 | 3 | - | 800 | 1h15min | 0.3 | |
| 13* | 3 | nanographite and binder: $Na_2SiO_3$ | 1000 | 3h20min | 4.8 | 19 |
| 14 | 3 | - | 1000 | 3h20min | 5.9 | |
| 15 | 4 | nanographite and binder: $Na_2SiO_3$ | 1000 | 3h | 0.57 | 11 |
| 16 | 4 | - | 1000 | 3h | 0.64 | |
| 17 | 4 | nanographite and binder: $Na_2SiO_3$ | 1250 | 3h | 12.10 | -3 |
| 18 | 4 | - | 1250 | 3h | 11.75 | |

*: according to the present invention.

Trials according to the present invention show a significant increase of the percentage of weight gain. Indeed, the steel substrate having the specific steel composition according to the present invention is well protected with the coating during the reheating step.

**Claims**

1. A method for the manufacture of a coated steel substrate, comprising the successive following steps:

A. The provision of a steel substrate having the following compositions in weight percent:

$0.31 \leq C \leq 1.2\%$,
$0.1 \leq Si \leq 1.7\%$,
$0.15 \leq Mn \leq 1.1\%$,
$P \leq 0.01\%$,
$S \leq 0.1\%$,
$Cr \leq 1.0\%$,
$Ni \leq 1.0\%$,
$Mo \leq 0.1\%$,
and on a purely optional basis, one or more elements such as
$Nb \leq 0.05\%$,
$B \leq 0.003\%$,

$Ti \leq 0.06\%$,

$Cu \leq 0.1\%$,

$Co \leq 0.1\%$,

$N \leq 0.01\%$,

$V \leq 0.05\%$,

the remainder of the composition being made of iron and inevitable impurities resulting from the elaboration,

B. The coating deposition using an aqueous mixture comprising from 1 to 60g/L of nanoparticles being nanographite flakes having a lateral size between 1 and 60$\mu$m and from 150 to 250g/L of a binder, wherein the binder is sodium silicate or the binder includes aluminum sulfate and alumina, to form a coating having a thickness comprised between 10 and 250$\mu$m,

C. Optionally, the drying of the coated steel substrate obtained in step B).

2. A method according to claim 1, wherein in step B), the deposition of the coating is performed by spin coating, spray coating, dip coating or brush coating.

3. A method according to any one of claims 1 or 2, wherein in step B), wherein the aqueous mixture comprises nanographite comprising above 95% by weight of C.

4. A method according to claim 3, wherein in step B), the aqueous mixture comprises nanographite comprising an amount of C equal or above to 99% by weight.

5. A method according to any one of claims 1 to 4, wherein in step B), the ratio in weight of nanographite with respect to binder is below or equal to 0.3.

6. A method according to any one of claims 1 to 5, wherein in step B), the aqueous mixture comprises an organometallic compound.

7. A method according to claim 6, wherein in step B), the concentration of the organometallic compound is equal or below to 0.12wt.%.

8. A method according to any one of claims 1 to 7, wherein in step C), when a drying is applied, the drying is performed at a temperature between 50 and 150°C or at room temperature.

9. A method according to any one of claims 1 to 8, wherein in step C), when a drying is applied, the drying step is performed with hot air.

10. A method according to any one of claims 1 to 9, wherein in step C), when a drying is applied, the drying is performed during 5 to 60minutes.

11. A method according to claim 1, wherein the lateral size of the nanoparticles is between 20 and 55$\mu$m.

12. A method according to claim 1, wherein the lateral size of the nanoparticles is between 30 and 55$\mu$m.

13. A method according to claim 1, wherein the steel substrate is a slab, a billet or a bloom.

14. A method according to claim 1, wherein the coating further comprises an organometallic compound.

15. A method according to claim 14, wherein the organometallic compound includes Dipropylene glycol monomethyl ether ($CH_3OC_3H_6OC_3H_6OH$), 1,2-Ethanediol ($HOCH_2CH_2OH$) and 2-ethylhexanoic acid, manganese salt ($C_8H_{16}MnO_2$).

16. A method for manufacture of a hot-rolled steel product comprising the following successive steps:

I. The provision of the coated steel substrate obtainable from the method according to any one of claims 1 to 15,

II. The reheating of the coated steel substrate in a reheating furnace at a temperature between 750 and 1200°C,

III. The descaling of the reheated coated steel sheet obtained in step II) and

IV. The hot-rolling of the descaled steel product.

17. A method according to claim 16, wherein in step II), the reheating is performed at a temperature between 750 and 900°C or between 900 and 1200°C.

18. A method according to claim 16 or 17, wherein in step III), the descaling is performed using water under pressure or the descaling is performed mechanically.

19. A method according to claim 18, wherein in step III), the water pressure is between 100 and 150 bars.

**Patentansprüche**

1. Verfahren zur Herstellung eines beschichteten Stahlsubstrats, umfassend die aufeinander folgenden Schritte:

   A. Die Bereitstellung eines Stahlsubstrats, das die folgenden chemischen Zusammensetzungen in Gewichtsprozent aufweist:

   $0,31 \le C \le 1,2$ %,
   $0,1 \le Si \le 1,7$ %,
   $0,15 \le Mn \le 1,1$ %,
   $P \le 0,01$ %,
   $S \le 0,1$ %,
   $Cr \le 1,0$%,
   $Ni \le 1,0$ %,
   $Mo \le 0,1$ %,
   und auf rein optionaler Basis ein oder mehrere Elemente, wie z. B.
   $Nb \le 0,05$ %,
   $B \le 0,003$ %,
   $Ti \le 0,06$ %,
   $Cu \le 0,1$ %,
   $Co \le 0,1$ %,
   $N \le 0,01$ %,
   $V \le 0,05$ %,
   wobei der Rest der Zusammensetzung aus Eisen und unvermeidlichen Verunreinigungen besteht, die aus der Herstellung resultieren,

   B. Die Beschichtungsabscheidung unter Verwendung eines wässrigen Gemischs, umfassend 1 bis 60 g/l Nanopartikel, die Nanographitflocken sind, die eine laterale Größe zwischen 1 und 60 μm und 150 bis 250 g/l eines Bindemittels aufweisen, wobei das Bindemittel Natriumsilikat ist oder das Bindemittel Aluminiumsulfat und Aluminiumoxid beinhaltet, um eine Beschichtung mit einer Stärke zwischen 10 und 250 μm zu bilden,
   C. Optional das Trocknen des in Schritt B) erlangten beschichteten Stahlsubstrats.

2. Verfahren nach Anspruch 1, wobei in Schritt B) die Abscheidung der Beschichtung durch Rotationsbeschichtung, Sprühbeschichtung, Tauchbeschichtung oder Bürstenbeschichtung ausgeführt wird.

3. Verfahren nach einem der Ansprüche 1 oder 2, wobei in Schritt B) das wässrige Gemisch Nanographit umfasst, umfassend über 95 Gewichtsprozent C.

4. Verfahren nach Anspruch 3, wobei in Schritt B) das wässrige Gemisch Nanographit umfasst, umfassend eine Menge an C von 99 Gewichtsprozent oder mehr.

5. Verfahren nach einem der Ansprüche 1 bis 4, wobei in Schritt B) das Gewichtsverhältnis von Nanographit zu Bindemittel kleiner als oder gleich wie 0,3 ist.

6. Verfahren nach einem der Ansprüche 1 bis 5, wobei in Schritt B) das wässrige Gemisch eine metallorganische Verbindung umfasst.

**7.** Verfahren nach Anspruch 6, wobei in Schritt B) die Konzentration der metallorganischen Verbindung gleich wie oder weniger als 0,12 Gewichtsprozent ist.

**8.** *Verfahren nach einem der Ansprüche 1 bis 7, wobei in Schritt C), wenn ein Trocknen angewendet wird, das Trocknen bei einer Temperatur zwischen 50 und 150 °C oder bei Raumtemperatur ausgeführt wird.

**9.** Verfahren nach einem der Ansprüche 1 bis 8, wobei in Schritt C), wenn ein Trocknen angewendet wird, der Trocknungsschritt mit Heißluft ausgeführt wird.

**10.** Verfahren nach einem der Ansprüche 1 bis 9, wobei in Schritt C), wenn ein Trocknen angewendet wird, das Trocknen, während 5 bis 60 Minuten ausgeführt wird.

**11.** Verfahren nach Anspruch 1, wobei die laterale Größe der Nanopartikel zwischen 20 und 55 $\mu$m ist.

**12.** Verfahren nach Anspruch 1, wobei die laterale Größe der Nanopartikel zwischen 30 und 55 $\mu$m ist.

**13.** Verfahren nach Anspruch 1, wobei das Stahlsubstrat eine Bramme, ein Knüppel oder ein Vorblock ist.

**14.** Verfahren nach Anspruch 1, wobei das Beschichten ferner eine metallorganische Verbindung umfasst.

**15.** Verfahren nach Anspruch 14, wobei die metallorganische Verbindung Dipropylenglykolmonomethylether ($CH_3OC_3H_6OC_3H_6OH$), 1,2-Ethanediol ($HOCH_2CH_2OH$) und 2-Ethylhexansäure, Mangansalz ($C_8H_{16}MnO_2$) beinhaltet.

**16.** Verfahren zur Herstellung eines warmgewalzten Stahlprodukts, umfassend die folgenden aufeinanderfolgenden Schritte:

I. Die Bereitstellung des beschichteten Stahlsubstrats, das aus dem Verfahren nach einem der Ansprüche 1 bis 15 erlangt werden kann,
II. Das Wiedererwärmen des beschichteten Stahlsubstrats in einem Wiedererwärmungsofen bei einer Temperatur zwischen 750 und 1200 °C,
III. Das Entzundern des in Schritt II) erlangten wiedererwärmten beschichteten Stahlblechs und
IV. Das Warmwalzen des entzunderten Stahlprodukts.

**17.** Verfahren nach Anspruch 16, wobei in Schritt II) die Wiedererwärmung bei einer Temperatur zwischen 750 und 900 °C oder zwischen 900 und 1200 °C ausgeführt wird.

**18.** Verfahren nach Anspruch 16 oder 17, wobei in Schritt III) das Entzundern unter Verwendung von Wasser unter Druck ausgeführt wird oder das Entzundern mechanisch ausgeführt wird.

**19.** Verfahren nach Anspruch 18, wobei in Schritt III) der Wasserdruck zwischen 100 und 150 bar ist.

**Revendications**

**1.** Procédé de fabrication d'un substrat en acier revêtu, comprenant les étapes successives suivantes :

A. La fourniture d'un substrat en acier ayant la composition suivante en pourcentage en poids :

$0,31 \leq C \leq 1,2$ %,
$0,1 \leq Si \leq 1,7$ %,
$0,15 \leq Mn \leq 1,1$ %,
$P \leq 0,01$ %,
$S \leq 0,1$ %,
$Cr \leq 1,0$%,
$Ni \leq 1,0$ %,
$Mo \leq 0,1$ %,
et, à titre purement facultatif, un ou plusieurs éléments tels que

Nb ≤ 0,05 %,
B ≤ 0,003 %,
Ti ≤ 0,06 %,
Cu ≤ 0,1 %,
Co ≤ 0,1 %,
N ≤ 0,01 %,
V ≤ 0,05 %

le reste de la composition étant constitué de fer et d'impuretés inévitables résultant de l'élaboration,

B. Le dépôt de revêtement utilisant un mélange aqueux comprenant de 1 à 60 g/l de nanoparticules étant des paillettes de nanographite ayant une taille latérale entre 1 et
60 $\mu$m et de 150 à 250 g/l d'un liant, dans lequel le liant est du silicate de sodium ou le liant comprend du sulfate d'aluminium et de l'alumine, pour former un revêtement ayant une épaisseur comprise entre 10 et 250 $\mu$m,
C. Facultativement, le séchage du substrat en acier revêtu obtenu à l'étape B).

2. Procédé selon la revendication 1, dans lequel à l'étape B), le dépôt du revêtement est effectué par revêtement par centrifugation, revêtement par pulvérisation, revêtement par immersion ou revêtement à la brosse.

3. Procédé selon l'une quelconque des revendications 1 et 2, dans lequel à l'étape B), le mélange aqueux comprend du nanographite comprenant plus de 95 % en poids de C.

4. Procédé selon la revendication 3, dans lequel dans l'étape B), le mélange aqueux comprend du nanographite comprenant une quantité de C égale ou supérieure à 99 % en poids.

5. Procédé selon l'une quelconque des revendications 1 à 4, dans lequel à l'étape B), le rapport en poids du nanographite par rapport au liant est inférieur ou égal à 0,3.

6. Procédé selon l'une quelconque des revendications 1 à 5, dans lequel à l'étape B), le mélange aqueux comprend un composé organométallique.

7. Procédé selon la revendication 6, dans lequel à l'étape B), la concentration du composé organométallique est égale ou inférieure à 0,12 % en poids.

8. Procédé selon l'une quelconque des revendications 1 à 7, dans lequel à l'étape C), lorsqu'un séchage est appliqué, le séchage est réalisé à une température comprise entre 50 et 150 °C ou à température ambiante.

9. Procédé selon l'une quelconque des revendications 1 à 8, dans lequel à l'étape C), lorsqu'un séchage est appliqué, l'étape de séchage est réalisée avec de l'air chaud.

10. Procédé selon l'une quelconque des revendications 1 à 9, dans lequel à l'étape C), lorsqu'un séchage est appliqué, le séchage est réalisé pendant 5 à 60 minutes.

11. Procédé selon la revendication 1, dans lequel la taille latérale des nanoparticules est comprise entre 20 et 55 $\mu$m.

12. Procédé selon la revendication 1, dans lequel la taille latérale des nanoparticules est comprise entre 30 et 55 $\mu$m.

13. Procédé selon la revendication 1, dans lequel le substrat en acier est une brame, une billette ou un bloom.

14. Procédé selon la revendication 1, dans lequel le revêtement comprend en outre un composé organométallique :

15. Procédé selon la revendication 14, dans lequel le composé organométallique comprend l'éther monométhylique du dipropylèneglycol ($CH_3OC_3H_6OC_3H_6OH$), le 1,2-Éthanediol ($HOCH_2CH_2OH$) et l'acide 2-éthylhexanoïque, un sel de manganèse ($C_8H_{16}MnO_2$).

16. Procédé de fabrication d'un produit d'acier laminé à chaud comprenant les étapes successives suivantes :

I. La fourniture du substrat d'acier revêtu pouvant être obtenu à partir du procédé selon l'une quelconque des revendications 1 à 15,

II. Le réchauffage du substrat en acier revêtu dans un four de réchauffage à une température comprise entre 750 et 1,200 °C,

III. Le décalaminage de la tôle d'acier revêtu réchauffée obtenue à l'étape II) et

IV. Le laminage à chaud du produit en acier décalaminé.

17. Procédé selon la revendication 16, dans lequel à l'étape II), le réchauffage est effectué à une température comprise entre 750 et 900 °C ou entre 900 et 1200 °C.

18. Procédé selon la revendication 16 ou 17, dans lequel à l'étape III), le décalaminage est effectué en utilisant de l'eau sous pression ou le décalaminage est effectué mécaniquement.

19. Procédé selon la revendication 18, dans lequel à l'étape III), l'eau sous pression se trouve entre 100 et 150 bar.

**Figure 1**

**Figure 2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101696328
- JP 2001073033 B
- JP 2000319758 B